# EUROPEAN PATENT APPLICATION

(11) **EP 4 604 314 A1**
(43) Date of publication of application: **20.08.2025**
(21) Application number: 24856866.9
(22) Date of filing: 10.07.2024
(51) Int. Cl.: H01M 50/609, H01M 10/48, H01M 50/627, H01M 50/636

(54) **ELECTROLYTE INJECTION DEVICE AND ELECTROLYTE INJECTION METHOD USING SAME**

(30) Priority: 18.08.2023 KR 20230108084; 09.07.2024 KR 20240090145
(71) Applicant: LG Energy Solution, Ltd., Seoul 07335 (KR)
(72) Inventor: PARK, Yangkyu, Daejeon 34122 (KR)
(74) Representative: Goddar, Heinz J.
(86) International application number: PCT/KR2024/095903
(87) International publication number: WO 2025/042255

(57) **Abstract**

An electrolyte injection device according to one embodiment of the present disclosure is an electrolyte injection device for injecting an electrolyte into a cell case, the device comprising: an upper plate with a built-in hopper for injecting an electrolyte into the cell case at the upper side of the cell case, a lower plate with a mounting hole through which the lower surface of the cell case is seated, and an elastic part that is located at a position corresponding to the mounting hole on the lower side of the lower plate and is compressed according to the pressure applied to the lower surface of the cell case, wherein a sensor unit for measuring a pressure applied to the lower surface of the cell case is located on an upper part of the elastic part.

## Description

### [TECHNICAL FIELD]

### Cross Citation with Related Application(s)

This application is based on and claims priority from Korean Patent Application No. 10-2023-0108084 filed on August 18, 2023 and Korean Patent Application No. 10-2024-0090145 filed on July 9, 2024 in the Korean Intellectual Property Office, the disclosures of which are incorporated herein by reference in their entirety.

The present disclosure relates to an electrolyte injection device and an electrolyte injection method using the same, and more particularly, to an electrolyte injection device that injects an electrolyte into a cell case in a manufacturing process of a battery cell, and an electrolyte injection method using the same.

### [BACKGROUND]

As a secondary battery is attracted considerable attention as an energy source for powerdriven devices, such as an electric bicycle, an electric vehicle, and a hybrid electric vehicle, as well as an energy source for mobile devices, such as a mobile phone, a digital camera, and a laptop computer, demand for the secondary battery is rapidly increasing.

Based on the shape of a battery case, a secondary battery may be classified into a cylindrical battery in which an electrode assembly is mounted in a cylindrical metal container, a prismatic battery in which an electrode assembly is mounted in a prismatic metal container, or a pouch type battery in which an electrode assembly is mounted in a pouch-shaped case made of an aluminum laminate sheet.

In addition, the electrode assembly may be typically classified into a jelly roll type (winding type) electrode assembly having a structure in which long sheet type positive electrodes and negative electrodes are wound with a separator interposed therebetween, a stacked type (lamination type) electrode assembly in which a plurality of positive and negative electrodes cut in a prescribed size unit are sequentially stacked with a separator interposed therebetween, and a stacked/folded type electrode assembly in which stacked type unit cells are wound with a long separator.

In the manufacturing process of a battery cell, the electrode assembly is sealed together with an electrolyte in a prescribed case. In the case of a cylindrical battery, a jelly-roll type electrode assembly is inserted into a metal can and an electrolyte is injected, wherein if the metal can is tilted or the sealing member coupled with the metal can is damaged, the injected electrolyte may leak out. However, there is no way to confirm tilting of the metal can and the damage to the sealing member during the progress of a process, which causes a problem that defective products are continuously generated.

### [DETAILED DESCRIPTION OF THE INVENTION]

### [Technical Problem]

Therefore, the present disclosure has been designed to solve the above-mentioned problems, and therefore, an object thereof is to prevent leakage of electrolyte by detecting abnormalities in advance when injecting an electrolyte into the cell case of a battery cell.

### [Technical Solution]

An electrolyte injection device according to an embodiment of the present disclosure is an electrolyte injection device for injecting an electrolyte into a cell case, the device comprising: an upper plate with a built-in hopper for injecting an electrolyte into the cell case at the upper side of the cell case, a lower plate with a mounting hole through which the lower surface of the cell case is seated, and an elastic part that is located at a position corresponding to the mounting hole on the lower side of the lower plate and is compressed according to the pressure applied to the lower surface of the cell case, wherein a sensor unit for measuring a pressure applied to the lower surface of the cell case is located on an upper part of the elastic part. a busbar assembly comprises:
The electrolyte injection device may further comprise a sealing part that hermetically seals a gap between the upper surface of the cell case and the lower surface of the hopper.

The sensor unit may be located so as to correspond to the edge of the lower surface of the cell case.

The sensor unit may comprise a surface pressure sensor.

The measurement value by the sensor unit comprises a pressure value according to each position, and whether or not an abnormal state has occurred may be determined based on the measurement value.

The abnormal state may comprise a first abnormal state in which the lower surface of the cell case and the lower plate form an acute angle, and a second abnormal state in which the sealing state between the upper surface of the cell case and the upper plate is incomplete.

Whether or not an abnormal state has occurred may be determined by whether or not the calculation result of the measurement value satisfies a predetermined condition.

The predetermined condition may comprise a first condition and a second condition.

The sensor unit comprises a plurality of sub-sensors, the predetermined condition comprises a first condition, and it may be determined that the first condition is satisfied if the difference between the sum of the measurement values obtained from the plurality of sub-sensors and the first reference value is within a predetermined range.

The sensor unit comprises a plurality of sub-sensors, the predetermined condition comprises a second condition, and it may be determined that the second condition is satisfied if the relative standard deviation of the measurement values obtained from the plurality of sub-sensors is smaller than the second reference value.

An electrolyte injection method according to another embodiment of the present disclosure uses the above-mentioned electrolyte injection device, and comprises: a step of seating a cell case in a mounting hole of a lower plate, a step of fixing the positions of the upper plate located on an upper side of the cell case and the lower plate on which the cell case is seated, a step of measuring the pressure formed on the lower surface of the cell case through a sensor unit to acquire a measurement value and determining whether or not an abnormal state has occurred based on the measurement value, and a step of injecting an electrolyte into the inside of the cell case if it is determined that no abnormal state has occurred.

The electrolyte injection method may comprise a step of re-fixing the positions of the upper plate and the lower plate, if it is determined that the abnormal state has occurred.

After the step of re-fixing the positions of the upper plate and the lower plate, the step of determining whether the abnormal state has occurred may be performed again.

After the step of determining whether an abnormal state has occurred, the method further comprise a step of comparing the number of repetitions with a preset number of times, if it is determined that an abnormal state has occurred, wherein the number of repetitions may be increased by 1 by performing the step of re-fixing.

The step of re-fixing may be performed, if the number of repetitions is less than the preset number of times.

A step of checking the state of the sealing part located at the lower part of the upper plate may be performed, if the number of repetitions is equal to or greater than the preset number of repetitions.

The step of determining whether an abnormal state has occurred may comprise a step of determining whether the calculation result of the measurement value satisfies the first condition.

The step of determining whether an abnormal state has occurred may further comprise a step of determining whether the calculation result of the measurement value satisfies the second condition.

### [Advantageous Effects]

According to one aspect of the present disclosure, in a manufacturing process of a cylindrical battery, abnormalities during electrolyte injection can be detected in advance, thereby preventing electrolyte leakage and minimizing the defect rate.

In addition, the present disclosure may have various other effects, and these will be described in each embodiment, or the description of the effects that can be easily inferred by a person skilled in the art will be omitted.

### [BRIEF DESCRIPTION OF THE DRAWINGS]

FIG. 1 is a side view of an electrolyte injection device according to an embodiment of the present disclosure.
FIG. 2 is a diagram showing a sensor unit mounted on an electrolyte injection device according to FIG. 1.
FIGS. 3 and 4 are diagrams showing abnormal states that may occur during electrode injection.
FIG. 5 is a diagram for explaining how an electrolyte injection device according to FIG. 1 determines an abnormal state.
FIG. 6 is a flow chart showing an electrolyte injection method according to an embodiment of the present disclosure.
FIG. 7 is a flow chart that embodies a part of the electrolyte injection method according to FIG. 6.

### [DETAILED DESCRIPTION OF THE EMBODIMENTS]

Hereinafter, preferred embodiments of the present disclosure will be described in detail with reference to the accompanying drawings. The terms used in the specification and the appended claims should not be construed as limited to general and dictionary meanings, but construed as meanings and conception coinciding the technical aspects of the present disclosure on the basis of the principle that the inventors can appropriately define the concept of the terms to explain the invention in the optimum method. Therefore, embodiments described in the specification and the configurations shown in the drawings are not more than the most exemplary embodiments of the present disclosure and do not fully cover the spirit of the present disclosure. Accordingly, it should be understood that there may be various equivalents and modifications that can replace those when this application is filed.

In the drawings, the dimension of each of components or a specific portion constituting the component is exaggerated, omitted, or schematically illustrated for convenience in description and clarity. Thus, the dimension of each element does not entirely reflect an actual size. Moreover, detailed descriptions related to well-known functions or configurations will be omitted in order not to unnecessarily obscure subject matters of the present disclosure.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, an electrolyte injection device according to an embodiment of the present disclosure will be described.

An electrolyte injection device according to an embodiment of the present disclosure is for injecting an electrolyte into a cell case after inserting an electrode assembly into the cell case in a manufacturing process of a battery cell.

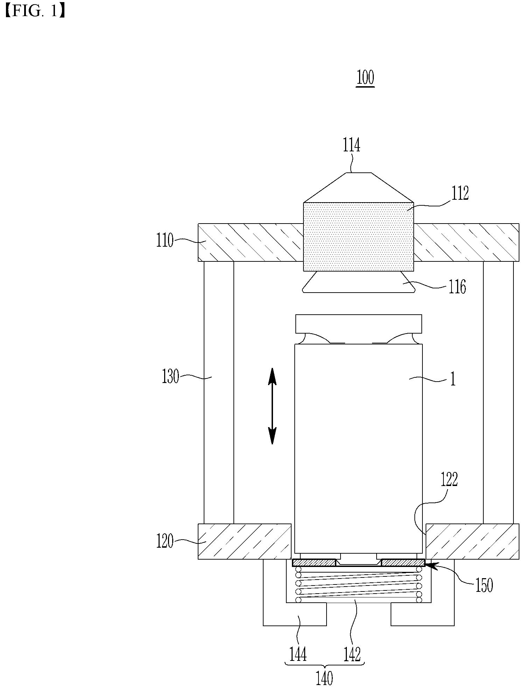

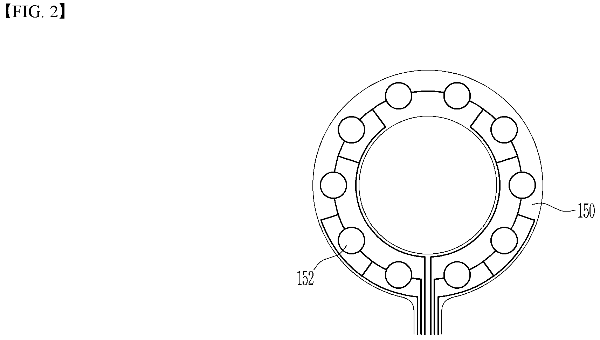

FIG. 1 is a side view of an electrolyte injection device according to an embodiment of the present disclosure. FIG. 2 is a diagram showing a sensor unit mounted on an electrolyte injection device according to FIG. 1.

Referring to FIG. 1, the electrolyte injection device 100 of the present embodiment may include: an upper plate 110 located on the upper side of the cell case 1, a lower plate 120 corresponding to the lower surface of the cell case 1, a fixing member 130 that fixes the positions of the upper plate 110 and the lower plate 120 to thereby minimizes the movement of the cell case 1, an elastic part 140 that supports the lower surface of the cell case 1 at the lower part of the lower plate 120, and a sensor unit 150 that is located on the upper surface of the elastic part 140 and detects a pressure value formed on the lower surface of the cell case 1.

Meanwhile, the electrolyte injection device 100 of the present embodiment can be used to manufacture a cylindrical battery. Therefore, the cell case 1 described in the present embodiment can have a cylindrical columnar shape. The cell case 1 may include a circular lower surface and a circumferential surface extending upward from the edge of the lower surface. Here, the upper surface of the cell case 1 may be in an open state.

The upper plate 110 may include a hopper 112 that guides the flow of electrolyte injected into the cell case 1. The hopper 112 may have a shape that penetrates through the upper plate 110. An electrolyte injection port 114 may be located at the upper part of the hopper 112, and a sealing part 116 may be located at the lower part of the hopper 112.

The sealing part 116 may hermetically seal a gap between the hopper 112 and the upper part of the cell case 1, thereby preventing the leakage of electrolyte moving from the hopper 112 to the cell case 1. The sealing part 116 may be located at the lower part of the upper plate 110. The sealing part 116 may have a ring shape, wherein the upper part of the sealing part 116 may correspond to the edge of the hopper 112, and the lower part of the sealing part 116 may correspond to the edge of the upper surface of the cell case 1. The sealing part 116 may be made from an elastic material so as to be easily in tight contact with the cell case 1.

As shown in FIG. 1, the sealing part 116 may have a conical shape from which the top portion has been wholly removed. The sealing part 116 may have a shape in which the diameter of the cross-sectional area increases as it goes from the upper part to the lower part. The diameter value of the upper part of the sealing part 116 may be larger than the diameter value of the lower part of the hopper 112. The diameter value of the lower part of the sealing part 116 may be larger than the diameter value of the upper part of the cell case 1. Thereby, the sealing part 116 may stably seal a gap between the hopper 112 and the cell case 1.

Although not specifically shown in the figure, the hopper 112 may have an inverted conical shape from which the top portion has been removed. This shape may be formed on the inside of the hopper 112, so that the hopper 112 may appear as having a cylindrical shape when observed from the outside. The hopper 112 may have a tapering shape, i.e., the diameter value of the cross-sectional area decreases as it goes from the upper part to the lower part. The diameter value of the upper part of the hopper 112 may be larger than the diameter value of the lower part of the hopper 112. The upper part of the hopper 112 may have a large cross-sectional area value, whereby the electrolyte injected from the upper part may not leak out but may be completely moved into the hopper 112. In addition, the lower part of the hopper 112 may have a relatively small cross-sectional area, and the diameter value of the lower part of the hopper 112 may be smaller than the diameter value of the cell case 1. Thereby, the hopper 112 may stably guide the flow of the electrolyte toward the inside of the cell case 1.

The lower plate 120 is provided with a mounting hole 122, and the lower surface of the cell case 1 can be inserted into the mounting hole 122. The cell case 1 can be inserted into the mounting hole 122, thereby minimizing the flow of the cell case 1 during the electrolyte injection process. The mounting hole 122 can have a shape corresponding to the axial cross section of the cell case 1. The area of the mounting hole 122 can be larger than the area of the axial cross section of the cell case 1. The shape of the mounting hole 122 can correspond to the shape of the lower surface of the cell case 1. The shape of the mounting hole 122 can be circular. Here, the axial cross section can refer to a cross section cut perpendicular to the axis, and the axis in the axial cross section of the cell case 1 can mean an axis in the longitudinal direction.

The fixing member 130 can fix the positions of the upper plate 110 and the lower plate 120. The upper plate 110 and the lower plate 120 can be located apart from each other, and both end parts of the fixing member 130 are respectively connected to the edges of the upper plate 110 and the lower plate 120, so that the gap between the upper plate 110 and the lower plate 120 can be prevented from further widening.

The fixing member 130 can be provided in various shapes.

For example, the fixing member 130 may have the form of a strap having a narrow width and a long length. In order for the fixing member 130 to stably fix the upper plate 110 or the lower plate 120, a hooking structure may be formed at the end part of the fixing member 130. More specifically, a portion curved from the main body of the fixing member 130 toward the upper plate 110 or the lower plate 120 may be formed at the end part of the fixing member 130.

After the cell case 1 is seated on the lower plate 120, and the upper plate 110 is located on the upper side of the cell case 1, the distance between the upper plate 110 and the lower plate 120 may be adjusted. The end parts of the fixing member 130 are coupled to the upper plate 110 and the lower plate 120, so that the positions of the upper plate 110 and the lower plate 120 can be fixed.

In another example, the fixing member 130 may have a structure that allows the fixing member 130 itself to be extended in length. Both end parts of the fixing member 130 may be fixed to the upper plate 110 and the lower plate 120, and the distance between the upper plate 110 and the lower plate 120 may be adjusted through the length extension of the fixed member 130.

Meanwhile, an elastic part 140 may be located on the lower side of the lower plate 120. The elastic part 140 may include an elastic body 142 having a restoring force according to compression and a support part 144 supporting the lower surface of the elastic body 142. The support part 144 may be designed to have a step with the lower plate 120, whereby the elastic body 142 may be located lower than the upper surface of the lower plate 120. The support part 144 may support the elastic body 142 at a position lower than the upper surface of the lower plate 120. The support member 144 may be located to correspond to the mounting hole 122 formed in the lower plate 120. The support part 144 may have a shape in which it extends to the lower side from the edge of the mounting hole 122 so as to be perpendicular to the lower plate 120, and extends again toward the radial center therefrom. The support part 144 may have a cylindrical shape having an opened upper part as a whole. The elastic body 142 may be located at a position corresponding to the mounting hole 122. The elastic body 142 may be located inside the mounting hole 122.

The elastic part 140 may be for stably fixing the cell case 1 between the upper plate 110 and the lower plate 120. The cell case 1 can receive a compressive force in the longitudinal direction by fixing the positions of the upper plate 110 and the lower plate 120 by the fixing member 130, thereby fixing the position of the cell case 1. At this time, if the distance value between the upper plate 110 and the lower plate 120 is too small, the compressive force acting on the cell case 1 is formed to be large, so that the cell case 1 may be damaged. Further, if the distance value between the upper plate 110 and the lower plate 120 is too large, sufficient compressive force is not applied to the cell case 1, which may make it difficult to stably fix the cell case 1. Therefore, the distance between the upper plate 110 and the lower plate 120 should be adjusted according to the size of the cell case 1, but the size of the cell case 1 may not be constant due to errors in the design and process, which causes a problem that the positions of the upper plate 110 and the lower plate 120 must be newly set each time. However, in the electrolyte injection device 100 of the present embodiment, an elastic part 140 is provided on the lower side of the lower plate 120, thereby capable of addressing to cell cases 1 having different sizes, and stably fixing the cell cases 1. More specifically, the gap between the upper plate 110 and the lower plate 120, i.e., the position where the upper plate 110 and the lower plate 120 are fixed by the fixing member 130, is designed to be constant, and the compression level of the elastic body 142 is formed differently depending on the length of the cell case 1, so that the cell case 1 can be stably fixed to the electrolyte injection device 100.

More specifically, the cell case 1 is arranged on the mounting hole 122 of the lower plate 120, and the lower surface of the cell case 1 may be located on the elastic part 140. The upper plate 110 may be located on the upper side of the cell case 1, wherein the sealing part 116 of the upper plate 110 may correspond to the opened upper surface of the cell case 1. In a state where the sealing part 116 and the cell case 1 are located on the same axis, the positions of the upper plate 110 and the lower plate 120 may be fixed by the fixing member 130, so that the cell case 1 may be fixed to the electrolyte injection device 100. At this time, the sealing part 116 may come into contact with the cell case 1. More specifically, the inner surface of the sealing part 116 can come into contact with the edge of the upper surface of the cell case 1. Here, when the positions of the upper plate 110 and the lower plate 120 are fixed by the fixing member 130, the elastic body 142 of the elastic part 140 can be compressed by the cell case 1, and the cell case 1 is supported to the upper side by the restoring force of the elastic body 142, so that the cell case 1 can be more stably located.

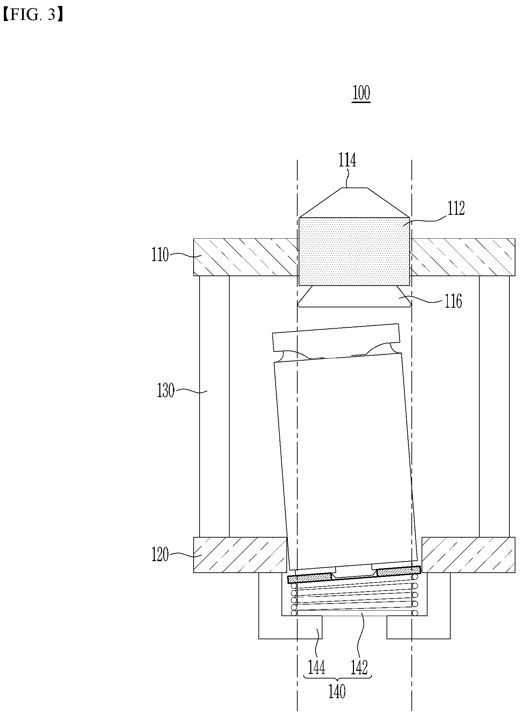

Meanwhile, the electrolyte injection device 100 shown in FIGS. 1 and 3 may be in a state where the upper plate 110 is not in tight contact with the cell case 1, which may be in a state before the positions of the upper plate 110 and the lower plate 120 are fixed by the fixing member 130. Further, the electrolyte injection device 100 shown in FIG. 2 may be in a state where the upper plate 110 is in tight contact with the cell case 1, and the positions of the upper plate 110 and the lower plate 120 are fixed by the fixing member 130.

Meanwhile, in FIGS. 1, 3 and 4, the fixed member 130 is depicted as if it is fixed to the upper plate 110 and the lower plate 120 and is capable of being extended in length, which is for convenience of illustration and may be different from the actual structure. Therefore, the fixing member 130 of the present embodiment may be provided as having a fixed length and being detachably attached to the upper plate 110 or the lower plate 120. When both end parts of the fixing member 130 are coupled to the upper plate 110 and the lower plate 120, the positions of the upper plate 110 and the lower plate 120 can be fixed. Before at least one of the two end parts of the fixing member 130 is fixed to the upper plate 110 or the lower plate 120, the fixing member 130 may be located apart from the upper plate 110 or the lower plate 120.

Meanwhile, the structure of the fixing member 130 may vary, and therefore, it is also possible for the fixing member 130 to be provided with the structure shown in FIGS. 1, 3 and 4. More specifically, the length of the fixing member 130 may be variable, and the fixing member 130 may be provided in a state where both end parts of the fixing member 130 are fixed to the upper plate 110 and the lower plate 120.

Meanwhile, when injecting the electrolyte into the inside of the cell case 1, if the cell case 1 and the sealing part 116 are not aligned on the same axis, there was a problem that the electrolyte leaks out.

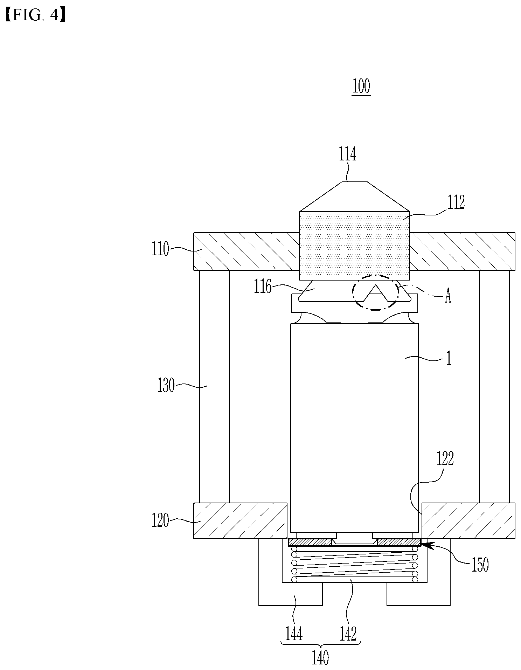

FIGS. 3 and 4 are diagrams showing abnormal states that may occur during electrode injection.

Referring to FIGS. 3 and 4, in the process of injecting an electrolyte into the cell case 1 using the electrolyte injection device 100, a first abnormal state or a second abnormal state may occur, so that the electrolyte may leak out of the cell case 1. Here, the abnormal state may mean a state in which the sealing state between the upper surface of the cell case 1 and the sealing part 116 is incomplete.

More specifically, as shown in FIG. 3, the cell case 1 may be located to be titled differently from the operator's intention. That is, in the case of the first abnormal state, the lower surface of the cell case 1 and the lower plate 120 may form an acute angle. In the case of the first abnormal state, the slope of the lower surface of the cell case 1 and the lower plate 120 may be equal to or greater than a first value. Here, the first value may be greater than 0 and less than 90. In the case of the first abnormal state in which the cell case 1 is located to be tilted in this way, the cell case 1 and the sealing part 116 may not be located on the same axis, whereby a gap may occur between the cell case 1 and the hopper 112, which may cause the electrolyte to leak out.

Further, as shown in FIG. 4, one side of the sealing part 116 may be damaged (A), which may cause the electrolyte to leak out. In the case of the second abnormal state in which the sealing part 116 is damaged, even if the cell case 1 and the sealing part 116 are located on the same axis, the space between the cell case 1 and the hopper 112 may not be hermetically sealed, so that the electrolyte may leak out of the cell case 1 during the injection process.

Meanwhile, conventionally, such an abnormal state could not be confirmed when injecting the electrolyte, but could be confirmed only through the leakage of the electrolyte after the electrolyte injection was completed, which led to an increase in the defect rate of the battery cell.

However, the electrolyte injection device 100 of the present embodiment includes a sensor unit 150, and thus can quickly determine whether or not electrolyte has leaked and or the possibility of the electrolyte leaking, and determine whether to inject the electrolyte.

The sensor unit 150 may be for measuring the pressure applied to the lower surface of the cell case 1. The sensor unit 150 may measure the pressure acting on the cell case 1 between the upper plate 110, the lower plate 120, and the elastic member 140. For this purpose, the sensor unit 150 may be located on the upper side of the elastic part 140. The sensor unit 150 may be located on the lower side of the cell case 1. In other words, during the electrolyte injection process, the cell case 1 may be arranged on the upper side of the elastic part 140 where the sensor unit 150 is located.

Conventional pressure sensors are provided one per unit area, and collect only pressure values for specific positions within the unit area. Therefore, the collected pressure values were estimated to be the pressure values formed over the entire corresponding unit area. Such pressure sensors have been mainly used to measure the load of an object or to measure the amount of change in load over time, and in electrolyte injection devices, they have been used to confirm the amount of electrolyte injected into the cell case.

However, this embodiment aims at confirming the pressure formed on the lower surface of the cell case 1 by position, and confirming whether or not the cell case 1 is properly aligned between the upper plate 110 and the lower plate 120, so that the conventional pressure sensor may not be preferable to achieve the above-mentioned purpose.

In response to this request, the sensor unit 150 may include a sensor that measures the pressure formed on a plane with high resolution. For example, the sensor unit 150 may include a surface pressure sensor. Here, the surface pressure sensor is suitable for measuring the surface pressure, has high resolution, and may have a small measurement error even when applied to a large area. The sensor unit 150 of the present embodiment may be designed to cover a wide area by using the surface pressure sensor, and may collect pressure values according to each position.

In particular, as mentioned above, the cell case 1 has a cylindrical columnar shape, and the lower surface of the cell case 1 may have a circular lower surface. Here, the sensor unit 150 may be provided in a shape corresponding to the lower surface of the cell case 1.

In the first abnormal state as shown in FIG. 3 and the second abnormal state as shown in FIG. 4, the cell case 1 having a circular lower surface can be tilted in one direction based on the center of the cell case 1. At this time, regardless of the direction in which the cell case 1 having a circular bottom surface is tilted, the sensor unit 150 can be located at a position corresponding to the direction in which the cell case 1 is tilted. That is, the sensor unit 150 can more precisely measure the pressure formed on the lower surface of the cell case 1 regardless of the direction in which the cell case 1 is tilted.

As shown in FIG. 2, the sensor unit 150 may be provided in a ring shape. This may be for measuring the pressure formed at the edge of the lower surface of the cell case 1. In addition, the sensor unit 150 may include a plurality of sub-sensors 152 arranged at an equal angle. Meanwhile, although FIG. 2 shows that ten sub-sensors 152 are provided, it is also possible for the sensor unit 150 to include sub-sensors 152 fewer than or more than that. However, as the number of sub-sensors 152 included in the sensor unit 150 increases, the resolution is improved, whereby in order for the sensor unit 150 to achieve the desired function, it may be preferable that the number of sub-sensors 152 is at least four or more.

In this way, when the cell case 1 has a circular lower surface and the sensor unit 150 has a ring shape, the cell case 1 having a circular lower surface can, regardless of the direction in which it is tilted, have the sensor unit 150 located at a position corresponding to the direction in which the cell case 1 is tilted. That is, the sub-sensor 152 may be simply arranged in a ring shape along the edge of the lower surface of the cell case 1, so that the sensor unit 150 can precisely measure the pressure formed at the edge of the lower surface of the cell case 1 regardless of the direction in which the cell case 1 is tilted.

Unlike the same, if the cell case 1 has a lower surface of a shape other than a circular shape, the ring-shaped sensor unit 150 may not be located at a position corresponding to the edge of the lower surface of the cell case 1 depending on the direction in which the cell case 1 is tilted. That is, in this case, it may be difficult for the sensor unit 150 to accurately measure the pressure formed at the edge of the lower surface of the cell case 1 depending on the direction in which the cell case 1 is tilted. In this case, the sensor unit 150 must be arranged in multiple sub-sensors 152 in various places on the entire lower surface of the cell case 1 or an area larger than the lower surface of the cell case 1, and this arrangement has the problem of reduced space efficiency and cost efficiency.

The sensor unit 150 includes a plurality of sub-sensors 152 and thus can measure in detail the pressure value formed on the lower surface of the cell case 1. The sensor unit 150 can individually acquire the values measured from each sub-sensor 152.

At this time, the pressure value detected by the sensor unit 150 may be referred to as a measurement value. The measurement value may include a first measurement value and a second measurement value, wherein the first measurement value and the second measurement value may be values collected from different sub-sensors 152, respectively. In the case where the number of the sub-sensors 152 is ten as shown in FIG. 2, the measurement value may include the first measurement value to the tenth measurement value.

When an abnormal state occurs in the electrolyte injection device 100, the pressure acting on the lower surface of the cell case 1 may be uneven. When an abnormal state occurs in the electrolyte injection device 100, the first measurement value and the second measurement value obtained from the sub-sensors 152 at different positions may show a difference.

When the first abnormal state occurs in the electrolyte injection device 100, the pressure acting on the lower surface of the cell case 1 may be uneven. When the first abnormal state occurs, the first measurement value acquired by the sub-sensor 152 located in the direction in which the cell case 1 is tilted may be high, and the second measurement value obtained by the sub-sensor 152 located in a different direction may be relatively low.

Furthermore, even if the second abnormal state occurs in the electrolyte injection device 100, the pressure acting on the lower surface of the cell case 1 may be uneven. In the case where one side of the sealing part 116 is damaged or its shape is deformed due to aging, causing a decrease in the sealing force in that part, a relatively low pressure may be applied to the lower surface of the cell case 1 corresponding thereto. In other words, when the second abnormal state occurs, the pressure acting on the lower surface of the cell case 1 may be deflected.

In this way, whether or not an abnormal state occurs can be determined based on the measurement value acquired by the sensor unit 150. By comparing the calculation results of the measurement values acquired by the sensor unit 150 with predetermined conditions, it is possible to determine whether or not an abnormal state has occurred.

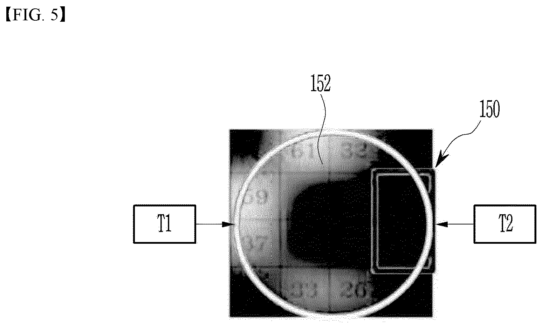

FIG. 5 is a diagram for explaining how an electrolyte injection device according to FIG. 1 determines an abnormal state. The photograph of FIG. 5 shows the result of detecting the pressure formed on the lower surface of the cell case 1 through a sensor, and the pressure value measured by the sensor is indicated by shading and numbers.

Referring to FIG. 5, the pressure acting on the lower surface of the cell case 1 can be acquired by position using the sensor unit 150, and it can be confirmed whether a deviation between them exists. In FIG. 5, T1 may be the edge of the lower surface of the cell case 1, and the sensor unit 150 may measure the pressure value formed along T1. The sub-sensors 152 corresponding to T1 are formed in eight, and the sensor unit 150 may acquire the first to eighth measurement values. More specifically, the first to eighth measurement values may be 1, 1, 26, 33, 37, 59, 61, 32, respectively. In FIG. 5, the measurement value acquired from the sub-sensors 152 located at T2 is 1, which is much lower than the other measurement values, whereby it can be estimated that a problem has occurred in the sealing state between the sealing part 116 and the cell case 1. In this way, it can be estimated that a first abnormal state or a second abnormal state has occurred in the electrolyte injection device 100 through the deviation of the measurement values.

In the following, the results of an experiment that confirmed whether or not a pressure deviation has occurred depending on the position on the lower surface of the cell case 1 when a problem occurs in the sealing state between the sealing part 116 and the cell case 1 will be described.

**In** the experiment described below, the sensor unit 150 includes four sub-sensors 152, and the measurement values include the first to fourth measurement values acquired from each sub-sensor 152. This is for using the sensor unit 150 equipped with four sub-sensors 152 in order to simplify the experiments, and the number of sub-sensors 152 of the present disclosure is not limited by the content of the experiment.

Further, in the experiment below, each measurement value was expressed as an index value for the reference values. Each measurement value was displayed by converting it to a relative value when the normal state value was set to 10 or 100. Here, the normal state may be a state in which the above-mentioned abnormal state does not occur.

**[Table 1]**

| Category | Alignment state | Air pressure (psi) | Measurement value of sensor unit 150 | | | Analysis results | |
|---|---|---|---|---|---|---|---|
| | | | Total load (kgf) | Maximum load (kgf) | Minimum load (kgf) | Average (kgf) | Relative standard deviation (%) |
| Case 1 | Flat | 10 | 100.0 | 29.1 | 19.2 | 25.0 | 18.89 |
| Case 2 | Tilted | 0 | 96.3 | 34.6 | 13.9 | 24.1 | 38.21 |
| Case 3 | Flat | 10 | 97.9 | 30.3 | 16.9 | 24.4 | 23.55 |
| Case 4 | Tilted | 5 | 94.6 | 34.9 | 13.3 | 23.6 | 37.64 |

The air pressure in Table 1 may be a pressure value formed inside the cell case 1 located in the electrolyte injection device 100. Experimentally, when air is injected into the inside of the cell case 1 through the hopper 112 on the electrolyte injection device 100, it may be a pressure value formed inside the cell case 1.

In Table 1, the air pressure value may be expressed as a relative value with respect to a reference value. Here, the reference value may be a pressure value inside the cell case 1 intended by the operator or normally expected.

In Table 1, the reference value of the air pressure was set to 10. For example, if the pressure value inside the cell case 1 is expected to be 8 psi in a normal state, and the actual measured value is 4 psi, the corresponding experimental result may be indicated as 5 in Table 1.

Referring to the above description, if the air pressure value is less than 10 in the experiment of Table 1, an abnormality may have occurred in the electrolyte injection device 100. More specifically, in case 2 and case 4 of Table 1, where the air pressure value is measured to be relatively small, it is confirmed that the cell case 1 is located in a tilted state.

The total load value(kgf) may be the sum of the measurement values detected by the sub-sensors 152 included in the sensor unit 150. In this experiment, the number of sub-sensors 152 may be four, and the total load value may be the sum of the first to fourth measurement values. In addition, the maximum load value(kgf) and the minimum load value(kgf) may be the largest value and the smallest value among the first to fourth measurement values.

Further, in Table 1, the total load value, maximum load value, minimum load value, and average value of the total load can be expressed as relative values. Here, the reference value can correspond to the compressive force formed in the elastic body 142 in the normal state.

In Table 1, the reference value of the total load was set to 100. For example, in the normal state, the compressive force formed in the elastic body 142 or the pressure value acquired from the sensor unit 150 resulting therefrom is expected to be 70 kgf, and if the sum of the pressure values actually acquired from the sub-sensor 152 is 60 kgf, it can be expressed as 85.7 in Table below.

When comparing the total load values of each case, the values of case 2 and case 4 were found to be higher than the values of case 1 and case 3, which are aligned in a flat state. This may be because the compressive force is appropriately formed in the elastic part 140 by the cell case 1 when the cell case 1 is located flat. Therefore, the alignment state of the cell case 1 can be estimated through the sum of the measurement values acquired from the sensor unit 150. Whether or not an abnormal state has occurred can be determined through the sum of the measurement values acquired from the sensor unit 150.

Furthermore, when comparing the relative standard deviation (%) of each case, the values of case 2 and case 4 were found to be lower than those of case 1 and case 3, where the alignment state was flat. This may mean that the deviation of the pressure value formed on the lower surface of the cell case 1 is reduced when the cell case 1 is located flat. Therefore, the alignment state of the cell case 1 can be estimated through the relative standard deviation of the measurement values acquired from the sensor unit 150. Whether or not an abnormal state has occurred can be determined through the relative standard deviation of the measurement values acquired from the sensor unit 150.

**In** this way, when an abnormal state occurs, a deviation may occur between the measurement values acquired from the sensor unit 150. The electrolyte injection device 100 of the present embodiment can confirm the distribution of pressure formed on the lower surface of the cell case 1 through the measurement values acquired by the sensor unit 150. Further, based on this, the electrolyte injection device 100 can determine whether or not an abnormal state has occurred.

Meanwhile, although not shown in the figure, the electrolyte injection device 100 of the present embodiment can include a control unit that collectively controls the operation of the electrolyte injection device 100.

The control unit can receive the measurement values collected from the sensor unit 150. The control unit can individually receive the measurement values acquired from each sub-sensor 152. The control unit can also calculate the measurement values acquired by each sub-sensor 152, to calculate the sum, average, standard deviation, etc. between the measurement values. The control unit may control an output unit included in the electrolyte injection device 100 so as to display processed data, i.e., pressure values or the result values calculated therefrom, or may transmit a request to the output device connected to the electrolyte injection device 100 to operate. In this case, the electrolyte injection device 100 may also include a communication unit for communicating with an external device.

The control unit can confirm whether or not an abnormal state has occurred in the electrolyte injection device 100 based on the pressure value collected from the sensor unit 150. The control unit can control the electrolyte injection device 100 so as to inject the electrolyte based on the pressure value collected from the sensor unit 150. The control unit can confirm whether the calculation result of the collected data corresponds to a predetermined condition. If the calculation result corresponds to a predetermined condition, the control unit can control the electrolyte injection device 100 so as to perform the injection of the electrolyte.

Here, there may be multiple predetermined conditions, and the control unit may determine whether each condition is satisfied, and determine whether to inject the electrolyte. For example, the control unit may control the electrolyte injection device 100 so as to inject the electrolyte when the first condition and the second condition are satisfied. In addition, the control unit may control the electrolyte injection device 100 so as not to inject the electrolyte when either of the first condition and the second condition is not satisfied.

However, as mentioned above, data processing and manipulation does not necessarily have to be performed by the control unit of the electrolyte injection device 100. According to an embodiment, the sensor unit 150 may individually include a control unit, and the data described above may be processed by the control unit included in the sensor unit 150.

Meanwhile, the predetermined conditions herein may be set in various ways.

The determination of the predetermined conditions described below is described as being performed by the control unit, wherein the control unit may be mounted on the electrolyte injection device 100, or may be provided independently in the sensor unit 150.

As an example of the predetermined condition, the control unit may consider the sum of the values collected from the sub-sensors 152. Assuming that the sensor unit 150 includes three sub-sensors 152, the control unit may compare the sum of the first to third measurement values with a first reference value. The control unit may determine that the first condition is satisfied if the difference between the sum of the first to third measurement values and the first reference value is within a predetermined range.

Here, the first reference value may be a predetermined value, and the first reference value may be a value set through an experiment, as shown in Table 1 above, or may be a value set through calculation.

The first reference value may be related to the compressive force formed on the elastic body 142. The first reference value may be related to the pressure value expected to act on the elastic body 142 by the cell case 1 when designing the electrolyte injection device 100. The first reference value may be the pressure value itself expected to act on the elastic body 142 in a normal state. Alternatively, it may be the total pressure value expected to be collected by the sensor unit 150 in a normal state.

Alternatively, the first reference value may be a pressure value formed on the lower surface of the cell case 1 when an abnormal state does not occur, as shown in Table 1 above. More specifically, the sum of the measurement values formed on the lower surface of the cell case 1 measured from the sensor unit 150 can be calculated when an abnormal state occurs and when an abnormal state does not occur. This process may be repeated through experiments, thereby determining the first reference value and the predetermined range.

In another example of the predetermined condition, the control unit may consider the degree of dispersion of the values collected from the sub-sensor 152. Here, the degree of dispersion may be calculated as a relative standard deviation. Alternatively, the degree of dispersion may be calculated through another calculation formula that can represent the degree of dispersion of multiple values in addition to the relative standard deviation. The control unit may compare the relative standard deviation of the first to third measurement values with a second reference value. The control unit may determine that the second condition is satisfied when the relative standard deviation of the first to third measurement values is smaller than the second reference value.

Here, the second reference value may be a predetermined value. The second reference value may be a value set through an experiment as shown in Table 1 above, or may be a value set through calculation.

The second reference value may be related to the outflow air pressure. The outflow air pressure may refer to the size of the air pressure that flows out between the cell case 1 and the sealing part 116 when air is injected into the inside of the cell case 1 through the hopper 112 on the electrolyte injection device 100. More specifically, the outflow air pressure may be calculated as the difference between the air pressure p1 expected to be formed inside the cell case 1 and the air pressure p2 actually formed inside the cell case 1, and may be calculated as 'outflow air pressure = p1-p2'. As the value of the outflow air pressure is larger, it can be inferred that there is a problem with the sealing condition between the seal part 116 and the cell case 1.

The second reference value can be determined experimentally. Through the experiment, the outflow air pressure when an abnormal state occurs can be measured, and the relative standard deviation of the measured value at this time can be calculated. More specifically, when the value of the outflow air pressure is greater than a predetermined value, it can be determined that an abnormal state has occurred in the electrolyte injection device 100. Further, when the value of the outflow air pressure is greater than a predetermined value in this way, the relative standard deviation of the pressure values formed on the lower surface of the cell case 1 as shown in Table 1 above can be calculated, and the second reference value can be determined based on this. In addition, when determining the second reference value, the relative standard deviation of the pressure value on the lower surface of the cell case 1 when an abnormal state does not occur can be taken into consideration. In this way, whether or not an abnormal state has occurred can be determined based on the second reference value determined through experiments.

Below, an electrolyte injection method based on the above-mentioned explanation is described. The electrolyte injection method described below may be performed by means of the electrolyte injection device 100 mentioned above. Therefore, the above contents can be applied to all of the following descriptions, and the same descriptions are omitted to avoid redundant descriptions.

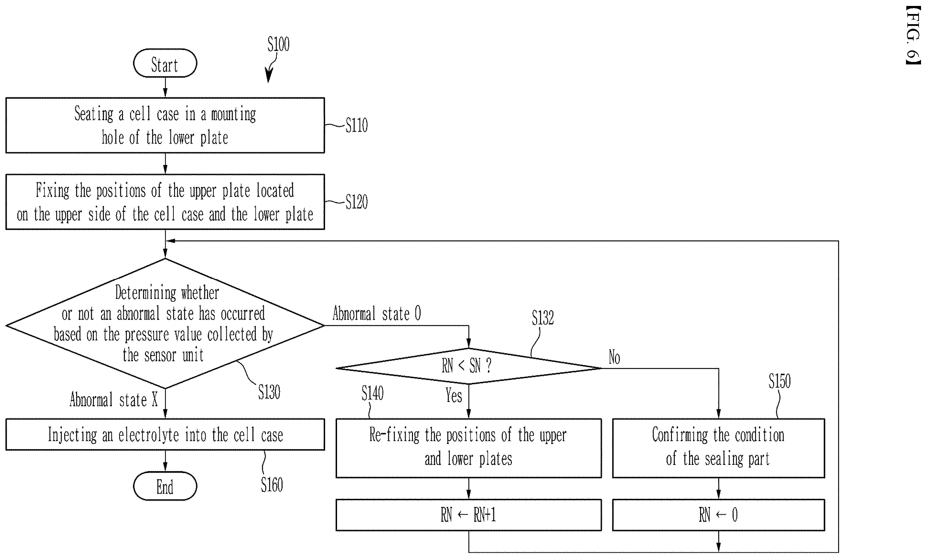

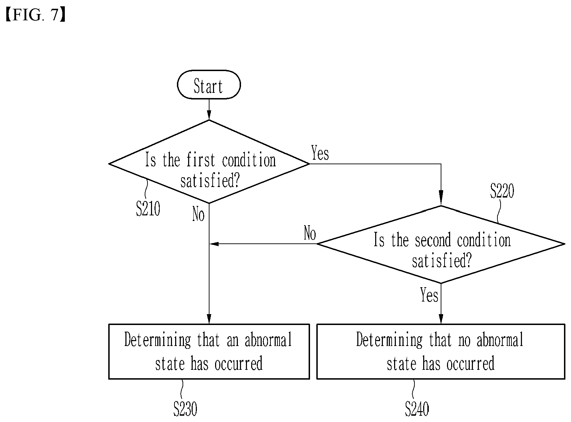

FIG. 6 is a flow chart showing an electrolyte injection method according to an embodiment of the present disclosure. FIG. 7 is a flow chart that embodies a part of the electrolyte injection method according to FIG. 6.

Referring to FIG. 6, the electrolyte injection method (S100) according to the present embodiment may include: a step (S110) of seating a cell case 1 in a mounting hole 122 of a lower plate 120, a step (S120) of fixing the positions of the upper plate 110 located on an upper side of the cell case 1 and the lower plate 120 on which the cell case 1 is seated, a step (S130) for determining whether an abnormal condition has occurred based on the pressure value collected by the sensor unit 150, a step (S140) of re-fixing the position of the upper plate 110 or the lower plate 120 if it is determined that an abnormal condition has occurred, a step (S150) of confirming the condition of the sealing part 116 if it is determined that an abnormal condition has occurred, and a step (S160) of injecting the electrolyte into the inside of the cell case 1 if it is determined that no abnormal condition has occurred.

Next, each step will be described in more detail.

The cell case 1 can be seated in the mounting hole 122 of the lower plate 120 (S110). An elastic part 140 can be located at a position corresponding to the mounting hole 122 on the lower side of the lower plate 120. The cell case 1 can be inserted into the mounting hole 122 and located on the elastic body 142 of the elastic part 140.

The position of the upper plate 110 located on the upper side of the cell case 1 or the lower plate 120 on which the cell case 1 is seated can be fixed (S120). Thereby, the flow of the cell case 1 is restricted, and the cell case 1 can be fixed inside the electrolyte injection device 100. More specifically, the positions of the upper plate 110 and the lower plate 120 can be fixed by the fixing member 130. The upper plate 110 and the lower plate 120 can be fixed in a state pressurizing the cell case 1, so that the elastic body 142 located on the lower surface of the cell case 1 can be compressed. The upper plate 110, the lower plate 120 and the cell case 1 press each other due to the restoring force of the elastic body 142, so that the cell case 1 can be stably fixed between the upper plate 110 and the lower plate 120. At this time, the cell case 1 can be located on the same axis as the sealing part 116.

Meanwhile, when the cell case 1 is fixed on the upper plate 110 and the lower plate 120, the electrolyte can be injected into the cell case 1 through the hopper 112 of the upper plate 110. At this time, a sealing part 116 can be located between the cell case 1 and the hopper 112. The sealing part 116 may hermetically seal a gap between the cell case 1 and the hopper 112, thereby preventing leakage of the electrolyte when it is injected. However, as mentioned above, if the cell case 1 is not arranged on the same axis as the sealing part 116, or if the sealing part 116 is damaged, the electrolyte may leak out of the cell case 1.

However, in this embodiment, whether or not an abnormal state has occurred can be determined based on the pressure value collected by the sensor unit 150 (S130). The sensor unit 150 can measure the pressure formed on the lower surface of the cell case 1. The sensor unit 150 can include a plurality of sub-sensors 152, and thus can acquire pressure values corresponding to each position. The electrolyte injection device 100 can confirm whether or not an abnormal state has occurred based on the acquired measurement value. The abnormal state can include a first abnormal state and a second abnormal state, and for this, refer to the description of FIG. 3 and FIG. 4. Here, the step (S130) of determining whether an abnormal state has occurred can be performed before the injection of the electrolyte.

The measurement value acquired from the sensor unit 150 can be processed by a prestored calculation formula. If the processed calculation value does not satisfy the predetermined condition, the control unit can determine that an abnormal state has occurred in the electrolyte injection device 100. In this way, the calculation processing of the measurement value and the determination of whether the predetermined condition is satisfied can be performed by the control unit, wherein the control unit may be included in the sensor unit 150, or may be included in the electrolyte injection device 100. In addition, the control unit correctively controls the operation of the electrolyte injection device 100, and so even if not specifically described, it can be understood that the calculation of the determination result and the control of the operation of the components in this embodiment are performed by the control unit.

Meanwhile, depending on the determination result of step (S130), the electrolyte injection method S100 can proceed to step (S140), step (S150), or step (S160).

In one example, if it is not determined that an abnormal state has occurred, the electrolyte injection device 100 can inject the electrolyte into the inside of the cell case 1 (S160). The electrolyte can be injected through the hopper 112 of the upper plate 110.

In another example, if it is determined that an abnormal state has occurred, the electrolyte injection device 100 can re-fix the positions of the upper plate 110 and the lower plate 120 (S140) or confirm the state of the sealing part 116 (S150). This may be to eliminate the cause of the first abnormal state or the second abnormal state described above.

Here, after performing step (S140) or step (S150), step (S130) may be determined again. This may be to confirm whether the cause of the abnormal state has been removed. Depending on the re-determination result of step (S130), the electrolyte injection method S100 may proceed to step (S140), step (S150), or step (S160).

If it is determined that an abnormal state has occurred, the electrolyte injection device 100 may again fix the positions of the upper plate 110 and the lower plate 120 again (S140). This may be to eliminate the cause of the first abnormal state. This may be to correct the misalignment of the sealing part 116 and the cell case 1. This may be to ensure that the sealing part 116 and the cell case 1 are located on the same axis. Here, since the contents of step (S140) are the same or similar to those of step (S120), it may be explained that step (S120) is performed again depending on the determination result of step (S130).

If it is determined that an abnormal state has occurred, the positional fixation of the upper plate 110 and the lower plate 120 by the fixing member 130 can be released. Thereby, the distance between the upper plate 110 and the lower plate 120 can be increased. For this purpose, the upper plate 110 can be moved to the upper side, or the lower plate 120 can be moved to the lower side. The positional fixation between the upper plate 110 and the lower plate 120 is released, so that the cell case 1 can be separated from the upper plate 110, and the upper surface of the cell case 1 can be separated from the sealing part 116 of the upper plate 110.

The positions of the upper plate 110 and the lower plate 120 can be then fixed again by the fixing member 130. Thereby, the cell case 1 can be fixed again in the electrolyte injection device 100. At this time, the sealing part 116 and the upper surface of the cell case 1 can be brought into tight contact with each other.

When the positions of the upper plate 110 and the lower plate 120 are fixed by the fixing member 130, and the cell case 1 is mounted on the electrolyte injection device 100, the sensor unit 150 can measure the pressure formed on the lower surface of the cell case 1. Based on the pressure value collected by the sensor unit 150, whether an abnormal state has occurred can be determined again. In this way, after step (S140) is performed, step (S130) can be performed again.

Steps (S140) and (S130) can be repeatedly performed. In other words, after the positions of the upper plate 110 and the lower plate 120 are again fixed, whether or not an abnormal state has occurred can be determined again based on the values acquired by the sensor unit 150, and if it is determined that an abnormal state has occurred, the positions of the upper plate 110 and the lower plate 120 can be fixed again.

The above-mentioned steps (S140) and (S130) can be repeated by a preset number of times (SN). Here, the preset number of times (SN) can be calculated in advance, or may be a value input in advance. For example, the preset number of times (SN) can be 3 times, and if it is confirmed that an abnormal state has occurred even after steps (S140) and (S130) have been repeated 3 times, step (S150) can be performed.

For this purpose, the electrolyte injection device 100, more specifically, the control unit, can count the number of repetitions (RN). Here, the number of repetitions (RN) may be the number of repetitions of the step (S140).

For example, the initial value of the number of repetitions (RN) may be 0, and may increase by 1 as step (S140) is repeated. Therefore, if the preset number of repetitions (SN) is 1, step (S140) is performed and then step (S130) may be performed. Step (S150) or step (S160) may be performed depending on the determination result of step (S130).

Therefore, the electrolyte injection method (S100) of the present embodiment may further include a step (S132) of comparing the number of repetitions (RN) with the preset number of repetitions (SN) if it is determined that an abnormal state has occurred through step (S130). Here, if the number of repetitions (RN) is less than the preset number of repetitions (SN), step (S140) may be performed. If the number of repetitions (RN) is equal to or greater than the preset number of repetitions (SN), step (S150) may be performed.

If it is determined that an abnormal state has occurred, the electrolyte injection device 100 can confirm the condition of the seal part 116 (S150). This may be to eliminate the cause of the second abnormal state. If the sealing part 116 is damaged, worn, or deformed, the gap between the sealing part 116 and the cell case 1 may not be sealed, so that the pressure formed on the lower surface of the cell case 1 may be deflected. If damage, wear, or deformation of the sealing part 116 is confirmed, the sealing part 116 may be replaced. At this time, as the step (S160) is performed, the number of repetitions (RN) may be set back to the initial value of 0.

After it is confirmed that there is no abnormality in the sealing part 116 or the replacement of the sealing part 116 is completed, the cell case 1 can be fixed in the electrolyte injection device 100 by the upper plate 110, the lower plate 120, and the elastic part 140. When the positions of the upper plate 110 and the lower plate 120 are fixed by the fixing member 130 and the cell case 1 is mounted in the electrolyte injection device 100, the sensor unit 150 can measure the pressure formed on the lower surface of the cell case 1. Based on the pressure value collected by the sensor unit 150, whether or not an abnormal state has occurred can be determined again. In this way, after step (S150) is performed, step (S130) can be performed again.

Here, the confirmation or replacement of the sealing part 116 can be performed in a state where the upper plate 110 and the cell case 1 are separated, and thus it can also be explained that after step (S150) is performed, step (S120) or step (S110) is performed again.

Meanwhile, referring to FIG. 7, whether an abnormal state has occurred in the electrolyte injection device 100 can be determined based on a predetermined condition. Here, the predetermined condition may include a first condition and a second condition.

As shown in FIG. 7, the method (S200) for determining whether or not an abnormal state has occurred through the electrolyte injection device 100 may include:
a step (S210) of determining whether or not the calculation result of the measurement values acquired from the sensor unit 150 satisfies the first condition, a step (S220) of determining whether or not the calculation result of the measurement value acquired from the sensor unit 150 satisfies the second condition, a step (S230) of determining that an abnormal state has occurred in the electrolyte injection device 100 if the first condition or the second condition is not satisfied, and a step (S240) of determining that an abnormal state has not occurred in the electrolyte injection device 100 if the first condition and the second condition are satisfied,

The control unit can determine whether the operation result of the acquired measurement value satisfies the first condition (S210). The first condition may relate to whether the difference between the sum of the measurement values and the first reference value is within a predetermined range. The control unit can determine that the first condition is satisfied if the difference between the sum of the measurement values and the first reference value is within a predetermined range. Here, the first reference value may be a value derived through experiment or theory.

The control unit can determine whether the operation result of the acquired measurement value satisfies the second condition (S220). The second condition may relate to whether the relative standard deviation value of the measurement values is smaller than the second reference value. The control unit can determine that the second condition is satisfied if the relative standard deviation of the measurement values is smaller than the second reference value. Here, the second reference value may be a value derived through an experiment.

If the first condition or the second condition is not satisfied, the control unit may determine that an abnormal state has occurred in the electrolyte injection device 100 (S230). If it is determined that an abnormal state has occurred in the electrolyte injection device 100, step (S140) or step (S150) may be performed as described in FIG. 6. Here, step (S132) may be performed before step (S140) or step (S150) is performed, and step (S140) or step (S150) may be performed depending on the determination result of step (S132).

The control unit can determine that no abnormal condition has occurred in the electrolyte injection device 100 if the first condition and the second condition are satisfied (S240). If it is determined that no abnormal condition has occurred in the electrolyte injection device 100, step (S160) can be performed as described in FIG. 6.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Symbols]

1: cell case
100: electrolyte injection device
110: upper plate
112: hopper
114: electrolyte injection port
116: sealing part
120: lower plate
122: mounting hole
130: fixing member
140: elastic part
150: sensor unit

## Claims

1. An electrolyte injection device for injecting an electrolyte into a cell case, the device comprising:
an upper plate with a built-in hopper for injecting an electrolyte into the cell case at the upper side of the cell case,
a lower plate with a mounting hole through which the lower surface of the cell case is seated, and
an elastic part that is located at a position corresponding to the mounting hole on the lower side of the lower plate and is compressed according to the pressure applied to the lower surface of the cell case,
wherein a sensor unit for measuring a pressure applied to the lower surface of the cell case is located on an upper part of the elastic part.

2. The electrolyte injection device of claim 1, wherein:
the electrolyte injection device further comprises a sealing part that hermetically seals a gap between the upper surface of the cell case and the lower surface of the hopper.

3. The electrolyte injection device of claim 1, wherein:
the sensor unit is located so as to correspond to the edge of the lower surface of the cell case.

4. The electrolyte injection device of claim 1, wherein:
the sensor unit comprises a surface pressure sensor.

5. The electrolyte injection device of claim 1, wherein:
the measurement value by the sensor unit comprises a pressure value according to each position, and
whether or not an abnormal state has occurred is determined based on the measurement value.

6. The electrolyte injection device of claim 5, wherein:
the abnormal state comprises a first abnormal state in which the lower surface of the cell case and the lower plate form an acute angle, and a second abnormal state in which the sealing state between the upper surface of the cell case and the upper plate is incomplete.

7. The electrolyte injection device of claim 5, wherein:
whether or not an abnormal state has occurred is determined by whether or not the calculation result of the measurement value satisfies a predetermined condition.

8. The electrolyte injection device of claim 7, wherein:
the predetermined condition comprises a first condition and a second condition.

9. The electrolyte injection device of claim 7, wherein:
the sensor unit comprises a plurality of sub-sensors,
the predetermined condition comprises a first condition, and
it is determined that the first condition is satisfied if the difference between the sum of the measurement values obtained from the plurality of sub-sensors and the first reference value is within a predetermined range.

10. The electrolyte injection device of claim 7, wherein:
the sensor unit comprises a plurality of sub-sensors,
the predetermined condition comprises a second condition, and
it is determined that the second condition is satisfied if the relative standard deviation of the measurement values obtained from the plurality of sub-sensors is smaller than the second reference value.

11. An electrolyte injection method using the electrolyte injection device of claim 1, the method comprising the steps of:
seating a cell case in a mounting hole of a lower plate,
fixing the positions of the upper plate located on an upper side of the cell case and the lower plate on which the cell case is seated,
measuring the pressure formed on the lower surface of the cell case through a sensor unit to acquire a measurement value and determining whether or not an abnormal state has occurred based on the measurement value, and
injecting an electrolyte into the inside of the cell case if it is determined that no abnormal state has occurred.

12. The electrolyte injection method of claim 11,
comprising re-fixing the positions of the upper plate and the lower plate, if it is determined that the abnormal state has occurred

13. The electrolyte injection method of claim 12, wherein:
after the re-fixing the positions of the upper plate and the lower plate,
the determining whether the abnormal state has occurred is performed again.

14. The electrolyte injection method of claim 12, wherein:
after the determining whether an abnormal state has occurred,
the method further comprise comparing the number of repetitions with a preset number of times, if it is determined that an abnormal state has occurred, wherein the number of repetitions is increased by 1 by performing the re-fixing.

15. The electrolyte injection method of claim 14, wherein:
the re-fixing is performed, if the number of repetitions is less than the preset number of times.

16. The electrolyte injection method of claim 14, wherein:
checking the state of the sealing part located at the lower part of the upper plate is performed, if the number of repetitions is equal to or greater than the preset number of repetitions.

17. The electrolyte injection method of claim 12, wherein:
the determining whether an abnormal state has occurred comprises determining whether the calculation result of the measurement value satisfies the first condition.

18. The electrolyte injection method of claim 17, wherein:
the determining whether an abnormal state has occurred further comprises determining whether the calculation result of the measurement value satisfies the second condition.
